# EUROPÄISCHE PATENTSCHRIFT

(11) **EP 1 708 563 B1**
(45) Veröffentlichungstag und Bekanntmachung des Hinweises auf die Patenterteilung: **25.07.2012**
(21) Anmeldenummer: 05701222.1
(22) Anmeldetag: 27.01.2005
(51) Int. Cl.: A01J 5/08

(54) **ZITZENGUMMI**
TEAT RUBBER
CAOUTCHOUC POUR TRAYON

(30) Priorität: 27.01.2004 DE 102004004057
(43) Veröffentlichungstag der Anmeldung: 11.10.2006
(73) Patentinhaber: Maier Jun, Jakob, 86842 Türkheim (DE); Hatzack, Wilfried, 86842 Türkheim (DE)
(72) Erfinder: Maier Jun, Jakob, 86842 Türkheim (DE); Hatzack, Wilfried, 86842 Türkheim (DE)
(74) Vertreter: Grünecker, Kinkeldey, Stockmair & Schwanhäusser
(86) Internationale Anmeldenummer: PCT/EP2005/000816
(87) Internationale Veröffentlichungsnummer: WO 2005/070197

(56) Entgegenhaltungen:
- EP-A- 0 347 004
- DE-A1- 4 420 321
- DE-A1- 10 018 870
- DE-A1- 10 036 644
- GB-A- 284 236
- GB-A- 1 241 172
- US-A- 2 744 496
- US-A- 3 308 788
- US-A- 4 610 220

## Beschreibung

Die Erfindung betrifft einen Zitzengummi zur Verwendung an einem Melkbecher eines Melkgeschirrs mit einem Kopfteil, an dem eine Dichtlippe vorgesehen ist, die eine Einführöffnung für eine Zitze bildet, einem Halterand zum Übergreifen einer Melkbecherhülse, einem mit dem Kopfteil in Verbindung stehenden Saugstutzen, sowie einem flächigen Zitzenauflageabschnitt, der an der an dem Kopfteil vorgesehenen Dichtlippe ausgebildet ist und die Einführöffnung definiert.

Beim maschinellen Melken wird ein Melkzeug verwendet, das im Wesentlichen mehrere Melkbecher, eine Sammeleinheit und entsprechend flexible Verbindungsleitungen zur strömungsmäßigen Verbindung der Melkbecher mit der Sammeleinheit umfasst. Von der Sammeleinheit wird die Milch über eine zentrale Sammelleitung abgesaugt und einem zentralen Milchauffangbehälter zugeführt. An die zentrale Sammelleitung können mehrere Melkzeuge angeschlossen sein, die in einem sogenannten Melkstand angeordnet sind.

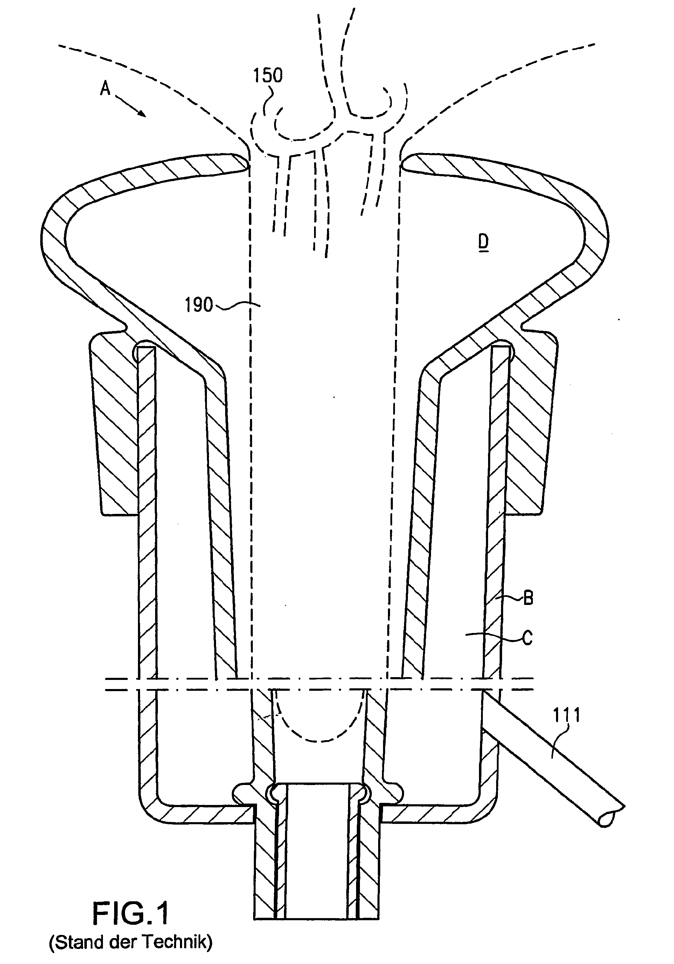

Im Folgenden wird Bezug auf Abbildung 1 genommen, die den Stand der Technik veranschaulicht.

Um ein möglichst natürliches und artgerechtes Melken zu erreichen, wird die Milch rhythmisch und stoßweise abgesaugt. Technisch wird dies ermöglicht durch eine Melkvorrichtung, die einen Melkbecher umfasst, der einen Zitzengummi A einschließt, der im Inneren einer Melkbecherhülse B angeordnet ist. Der Zitzengummi A unterteilt den Innenraum des Melkbechers in zwei Bereiche, um damit einen sogenannten Zweiraummelkbecher zu bilden. An das Innere des Zitzengummis A, in dem die Zitze 190 liegt und das einen der beiden Bereiche repräsentiert, wird Vakuum bzw. ein geeigneter Unterdruck angelegt, so dass die Milch aus der Zitze 190 abgesaugt wird. Zwischen Zitzengummi A und Melkbecherhülse B ist der zweite Bereich als ein vakuumdichter Hohlraum C ausgebildet, der abwechselnd mit Atmosphärendruck und einem Unterdruck beaufschlagt wird. Dieser vakuumdichte Hohlraum C des Melkbechers zwischen Zitzengummi A und Melkbecherhülse B wird Pulsraum C genannt. Der Zitzengummi

A führt eine rhythmisch pulsierende Bewegung aus, bei der der Zitzengummi A sich einfaltet bzw. kollabiert, wenn im Innenraum des Zitzengummis A Vakuum anliegt und wenn im Pulsraum C Atmosphärendruck herrscht, und sich durch seine Eigenelastizität wieder erweitert, wenn im Pulsraum C Vakuum herrscht. Beim Kollabieren des Zitzengummis A wird der Milchfluss aus der Zitze 190 trotz des weiterhin vorhandenen Vakuums an der Zitze 190 unterbrochen und gleichzeitig wird ein massierender Reiz auf die Zitze 190 ausgeübt, so dass ein Blutstau im Zitzengewebe weitest gehend vermieden wird. Der beim Kollabieren des Zitzengummis A unterhalb des Einfaltungsbereichs vorhandene Milchpfropfen fließt dann zur Milchsammeleinheit ab, wobei die Geschwindigkeit des abfließenden Milchpfropfens durch das Einfalten des Zitzengummis A zusätzlich erhöht wird.

Über den Zitzengummi A entsteht der Kontakt zwischen dem Tier und der Technik. Die Form, das Material und die Bewegung des Zitzengummis A während des Melkvorgangs bestimmen im Wesentlichen den Erfolg des Melkvorgangs. Zum Beispiel reagiert eine Kuh in der Regel auf weichere Zitzengummis A positiv und beim Übergang von weichen auf härtere Zitzengummis A sind langfristig Restriktionen, d. h. geringere Milchflüsse und ein größeres Nachgemelk (d. h. die Milch fließt nur noch durch langwieriges Massieren des Euters und der Zitzen ab) zu beobachten. Ein zu kleiner Zitzengummi A verengt die milchableitenden Wege und verhindert hohe Milchflüsse. Wird dagegen eine kleine Zitze mit einem zu großen Zitzengummi A gemolken, kommt es zu Gewebeüberdehnungen mit Geweberissen und anschließender Anlagerung von Bindegewebe. Die Zitzen 190 werden hart und die Melkbarkeit der Kühe verschlechtert sich.

Da der Zitzengummi A möglichst schonend an der Zitze liegen soll, ergibt sich häufig als weiteres Problem die unzureichende Haftung des Zitzengummis an der Zitze. Einerseits darf der Druck auf die Zitze 190 durch den Zitzengummi A und der Unterdruck des Melkvakuums nicht zu groß sein, und andererseits darf der Melkbecher beim Melken nicht herunterfallen.

Ein weiterer Vorgang wirkt sich ungünstig auf den automatischen Melkvorgang aus. Im Verlauf des Melkvorganges schrumpft das Euter und die Zitzen 190 werden tiefer in den Melkbecher hineingezogen. Der Melkbecher "klettert" sozusagen an der Zitze 190 hoch, schnürt die Zitze 190 ab und drückt auf den am oberen Ende der Zitze 190 liegenden sogenannten Fürstenbergschen Venenring 150. Wird der Fürstenbergsche Venenring 150 durch einen hochgekletterten Melkbecher abgeschnürt, wird die Durchblutung der Zitzen 190 gestört, was für das Tier unbehaglich ist. Hauptsächlich wird aber der Milchfluss aus dem Euter in die Zitze sehr stark behindert, was ein schnelles, schonendes und vollständiges Ausmelken sehr stark erschwert. Auch die Kooperation des Tieres, von der der Melkerfolg wesentlich abhängt, nimmt ab. Langfristig führt dies zu einer zunehmenden Inaktivität des milchproduzierenden Gewerbes.

Zur tiergerechten Milchhehrgabe, bei der sich das Tier wohlfühlt, ist es deshalb vorteilhaft, wenn unter anderem folgende Voraussetzung erfüllt ist.

Der Zitzengummi darf die Zitze nicht einschnüren. Insbesondere am Ende des Melkvorganges schrumpfen Zitze und Euter zusammen und der Melkbecher klettert an der Zitze hoch bevor das Euter ausgemolken ist. Die Milchkanäle und Blutgefäße werden abgeklemmt und der Milchfluss kommt zum Erliegen. Entsprechend sind Nachmelkarbeiten notwendig. Der Zitzengummi A darf also den Fürstenbergschen Venenring 150 nicht abschnüren und dessen Durchblutung einschränken.

Weiterhin ist es für einen ungehinderten Melkvorgang unerlässlich, dass der Zitzengummi A an der Zitze 190 gut haftet, so dass der Melkbecher nicht herunterfällt und ein geeigneter Unterdruck für den Melkvorgang aufrecht erhalten werden kann, möglichst unabhängig von der Größe und der Form der Zitze 190.

Aus der DE 196 35 719 ist ein Zitzengummi der eingangs genannten Art bekannt, der dadurch gekennzeichnet ist, dass die Wand des Kopfteils in einem zwischen der Einführöffnung für die Zitze und im Übergang in den Halterand liegendenden Bereich versteift ausgebildet ist, dass das der Einführöffnung für die Zitze zugewandte Ende des Saugstutzens in Höhe des versteiften Bereichs in dem Kopfteil übergeht, dass wenigstens ein Teilbereich des zwischen dem versteiften Bereich und dem Übergang in den Halterand liegenden Teils des Kopfteils in Bezug auf den versteiften Bereich elastisch verformbar ausgebildet ist und dass dieser Teil des Kopfteils zusammen mit dem der Einführöffnung für die Zitze zugewandten Ende des Saugstutzens einen Hohlraum zwischen sich begrenzen. Die Ausgestaltung dieses Zitzengummis bewirkt, dass sich im Verlauf der aufeinanderfolgenden Saugphase und Entlastungsphase der Melkbecher in Längsrichtung der Zitze hebt und senkt, was zu einer Entspannung der Muskulatur am Euter führt.

Aus der DE 199 49 151 ist ein Zitzengummi mit einem Kopfteil benannt, wobei das Kopfteil eine Einführöffnung für eine Zitze aufweist. Weiterhin hat der Zitzengummi einen Stutzen, der mit dem Kopfteil verbunden ist, und eine Halterung zur Befestigung des Zitzengummis in einer Melkbecherhülse. Der Zitzengummi ist aus zumindest einem ersten und einem zweiten Bauteil zusammengesetzt, wobei das erste und das zweite Bauteil auswechselbar miteinander verbunden sind. Auf diese Weise lässt sich ein an verschiedene Zitzengrößen anpassbares System mit einem Stutzen und verschiedenen Kopfteilen schaffen.

Aus der US 2,744,496 ist ein Zitzengummi bekannt mit einer flexiblen Lippe senkrecht zur Zitzenachse, wobei sich die flexible Lippe aufweitet und nach innen biegt, wenn die Zitze eingeführt wird und wobei sich die Zitzenöffnung automatisch an Form und Größe der Zitze anpasst.

DE 44 20 321 beschreibt einen Zitzengummi, der im Bereich der Einführöffnung einen dünnwandigen, schlauchförmigen Ansatz aufweist, der ein Hochklettern und ein Abfallen des Zitzengummis verhindert. Durch die schlauchförmige Einführöffnung ist das Einführen der Zitze jedoch sehr schwierig.

DE 100 18 870 beschreibt einen Zitzengummi, dessen Kopfteil als Ringschlauch ausgebildet ist. Die Herstellung eines solchen Schlauches, d.h. eines nahezu geschlossenen Hohlraums ist mit erhöhtem Aufwand und deshalb mit höheren Kosten verbunden.

Die GB-A-1241172 beschreibt Verbesserungen von Melkbechereinsätzen und beschreibt insbesondere die Form der Zitzeneinführöffnung eines Zitzengummis.

Die DE-A- 44 20 321 beschreibt einen Zitzengummi mit einem verbesserten elastischen Dichtrand.

Die US-A- 4,610,220 betrifft einen verbesserten Melkbecher mit Zitzengummi, der aus einer Silikonröhre besteht. Die US-A-4,610,220 offenbart alle Merkmale im einleitenden Teil des Anspruches 1.

Es ist die Aufgabe der vorliegenden Erfindung, einen Zitzengumml bereitzustellen, der verbesserte Eigenschaften hinsichtlich des natürlichen und artgerechten Melkens aufweist, ein leichtes Anlegen des Zitzengummis der eingangs genannten Art erlaubt, gut an der Zitze haftet und die Zitze und den Fürstenbergschen Venenring nicht einschnürt.

Die Aufgabe wird gelöst durch einen Zitzengummi gemäβß des Anspruches 1.

Bei diesem Zitzengummi weist ein Teil der Einführöffnung eine konisch zulaufende Fläche auf, die zur Innenseite des Zitzengummis derart konisch zuläuft, dass der am oberen Ende, bzw. an der Basis der Zitze liegende Fürstenbergsche Venenring nicht mit dem Zitzengummi in Kontakt kommen kann und kein Druck darauf ausgeübt werden kann, selbst wenn der Melkbecher in Richtung des Euters verrutscht. Weiterhin tritt ein Effekt auf, bei dem sich die unteren Ränder des flächigen Zitzenauflageabschnitts zur Zitze bewegen, wenn der Zitzengummi ungewollt nach unten von der Zitze rutscht. Die Einführöffnung verengt sich dadurch und die Haftung des Zitzengummis an der Zitze verbessert sich. Diese Vorteile führen dazu, dass die Eingangs erwähnten Probleme durch einen Zitzengummi der eingangs genannten Art in Kombination mit diesem Merkmal gelöst werden können.

Weiterhin schließt sich am Rand einer weiten Öffnung der konisch zulaufenden Elnführöffnung eine Euteranlagefläche an, die verhindern kann, dass die Zitze mit dem Fürstenbergschen Venenring oder mit Teilen des Euters durch ein Melkvakuum in den Zitzengummi hineingezogen werden, wenn das Euter beim Melkvorgang schrumpft, so dass der Fürstenbergsche Venenring nicht In den engen, druckausübenden Bereich des Zitzengummis kommen kann.

Bei dieser Art Zitzengummi ist die eine konisch zulaufende Fläche der konisch zulaufenden Einführöffnung im Querschnitt konkav, konvex oder linear.

Überguange zwischen der konisch zulaufenden Fläche und dem, flächigen Zitzenauflageabschnitt beziehungsweise der Euteranlagefläche sind gelenkartig ausgebildet. Durch die Gelenke wird ein Effekt der konisch zulaufenden Fläche verstärkt, bei dem sich die unteren Ränder des flächigen Zitzenauflageabschnitts zur Zitze bewegen, wenn der Zitzengummi ungewollt nach unten von der Zitze rutscht. Die Einführöffnung verengt sich dadurch und die Haftung des Zitzengummis an der Zitze verbessert sich.

Die gelenkartigen Überguange zwischen der konisch zulaufenden Fläche und dem flächigen Zitzenauflageabschnitt beziehungsweise der Euteranlagefläche weisen eine Materialverdünnung, eine Einkerbung oder eine Veränderung der Materialeigenschaften Im Vergleich zu dem angrenzenden Material auf. Dadurch nimmt der Übergang eine gelenkartige Eigenschaft an.

In einer Ausführungsform weist zumindest ein Teil des flächigen Zitzenauflageabschnitts und/oder Innenflächen des Saugstutzens gepolsterte Oberflächen auf. Dadurch legen sich die Zitzenanlageflächen des Zitzengummis besonders schonend um die Zitze und ein natürlicherer Melkvorgang wird erreicht.

In noch einer anderen Ausführungsform besteht die gepolsterte Oberfläche aus einem geschäumten Elastomer. Dadurch werden die elastischen Eigenschaften des Elastomers für den Melkvorgang vorteilhaft verändert und das Gewicht wird reduziert.

In noch einer weiteren Ausführungsform ist das geschäumte Elastomer Schaumsilikon. Silikon ist als besonders hautfreundlich bekannt und durch das Aufschäumen werden dessen elastische Eigenschaften verbessert und das Gewicht wird reduziert.

In einer anderen Ausführungsform ist das geschäumte Elastomer oberflächlich aufgespritzt.

In einer anderen Ausführungsform besteht der gesamte flächige Zitzenauflageabschnitt und/oder der Saugstutzen aus dem geschäumten Elastomer.

Die beiden letztgenannten Ausführungsformen sind alternative Ausführungsformen, die gewählt werden können, je nach dem ob ein optimlertes Gewicht oder eine höhere Stabilität erreicht werden soll. Es sind jedoch auch Mischformen denkbar, bei denen besonders beanspruchte Teile des Zitzengummis auf Haltbarkeit, d.h. ungeschäumt, optimiert werden, und die Teile, die in intensivem Hautkontakt bzw. wenig beansprucht sind, werden hautfreundlich bzw. gewichtsoptimiert, d.h. geschäumt, ausgelegt.

In noch einer Ausführungsform sind die gepolsterten Oberflächen als gepolsterte Taschen ausgebildet. Der Begriff Taschen steht hier für Bereiche, die gegenüber den angrenzenden Bereichen erhaben ausgebildet sind. Solche Taschen sind vorteilhaft, wenn nur an den Zitzenauflagenflächen ein besonders dickes Polster geschaffen werden soll, ohne die Stabilität und Haltbarkeit zu beeinträchtigen.

Alternativ zu oder in Kombination mit den geschäumten Taschen sind die gepolsterten Oberflächen als ein mit einem Fluid, insbesondere mit Gas gefülltes Kissen ausgebildet. Ein mit Gas gefülltes Kissen hat den Vorteil, dass die Größe und die Festigkeit des Kissens durch Verändern des Druckes einstellbar ist. Dies verbessert die Flexibilität bei unterschiedlichen Zitzengrößen.

In noch einer anderen Ausführungsform ist die gepolsterte Tasche oder das mit Gas gefüllte Kissen ein auswechselbarer Einsatz. Dadurch lässt sich die gepolsterte Tasche oder das mit Gas gefüllte Kissen leicht austauschen, wenn das Kissen/Polster verletzt ist. Weiterhin können Kissen/Polster unterschiedlicher Größe je nach Zitzengröße eingesetzt werden, was die Flexibilität des Systems erhöht. Der auswechselbare Einsatz kann dabei wieder in .Ringform mit einer geeigneten Elastizität ausgebildet sein, um die Haftung des Zitzengummis zu verbessern.

Anzumerken ist, dass die obengenannten Merkmale einzeln oder in Kombinationen mit dem Zitzengummi der Eingangs genannten Art kombiniert werden können.

Nachfolgend werden bevorzugte Ausführungsformen der Erfindung mit Bezug auf die begleitenden Zeichnungen beispielhaft näher erläutert und beschrieben.

In den Zeichnungen zeigen:
Fig. 1 eine Schnittansicht des Standes der Technik eines Zitzengummis
Fig. 2 eine Schnittansicht einer Ausführungsform eines Zitzengummis;
Fig. 2a eine Draufsicht auf einen Zitzengummi gemäß Fig. 2;
Fig. 2b eine Draufsicht einer weiteren Ausführungsform des verbreiterten Randes der Einführöffnung eines Zitzengummis gemäß Fig. 2;
Fig. 2c einen Ausschnitt des Zitzengummis, worin eine Winkelstellung der flachigen Zitzenauflagefläche zur Dichtlippe veranschaulicht wird;
Fig. 3 eine Schnittansicht einer weiteren Ausführungsform eines Zitzengummis mit vergrößertem Kopfvolumen;
Fig. 4 eine Schnittansicht einer weiteren Ausführungsform mit Lamellen als einem Vorspannungsmittel;
Fig. 4a eine Schnittansicht von oben einer Ausführungsform von Fig. 4;
Fig. 4b eine Schnittansicht von oben einer weiteren Ausführungsform von Fig. 4;
Fig. 5 eine Schnittansicht einer weiteren Ausführungsform mit einer reversiblen Verbindung zwischen dem verbreiterten Rand und dem Kopfteil;
Fig. 6a eine Schnittdarstellung einer besonderen Ausführungsform mit außen liegendem Vorspannungselement, wobei über einen verschiebbaren Ring der Querschnitt der Einführöffnung verändert werden kann. Fig. 6a zeigt das Vorspannungselement in einer ersten Stellung;
Fig. 6b das Vorspannungselement aus Fig. 6a in einer zweiten Stellung zeigt, bei der der Querschnitt der Einführöffnung verkleinert ist;
Fig. 6c die Ausführungsform der Fig. 6a und 6b mit innen liegendem Vorspannungselement;
Fig. 7 eine Schnittdarstellung einer besonderen Ausführungsform mit innenllegendem Vorspannungsmittel;
Fig. 7a eine Ausführungsform des Vorspannungselements in einem eingefalteten Zustand;
Fig. 7b die Ausführungsform von Fig. 7a in einem entfalteten Zustand; und
Fig. 8 eine Ausführungsform gemäß der vorligenden Erfindung des Zitzengummis mit gezielter Aussparung für den Fürstenbergschen Venenring.

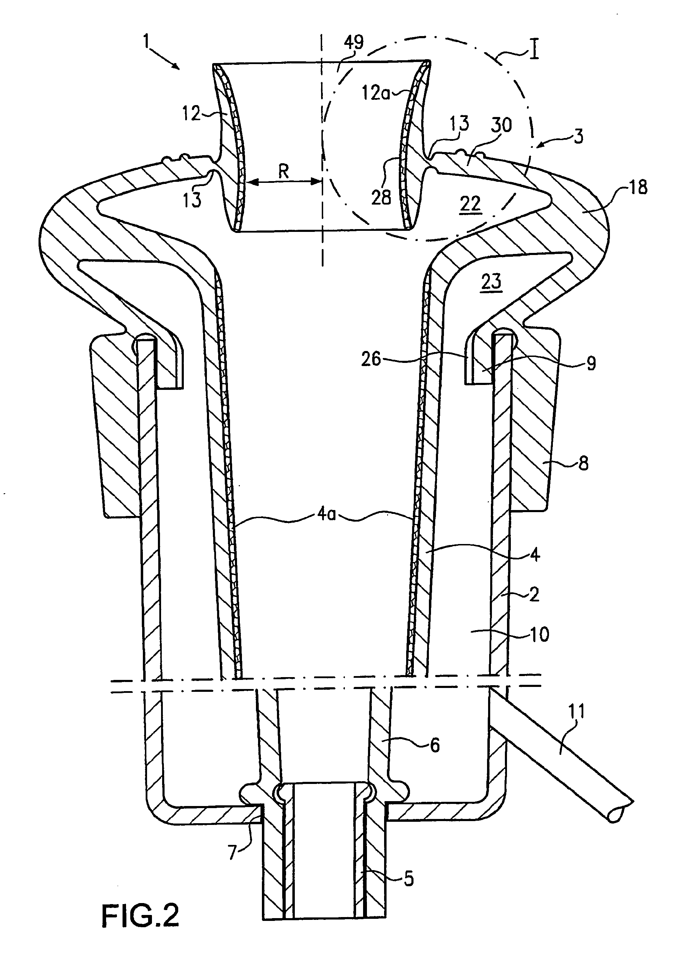

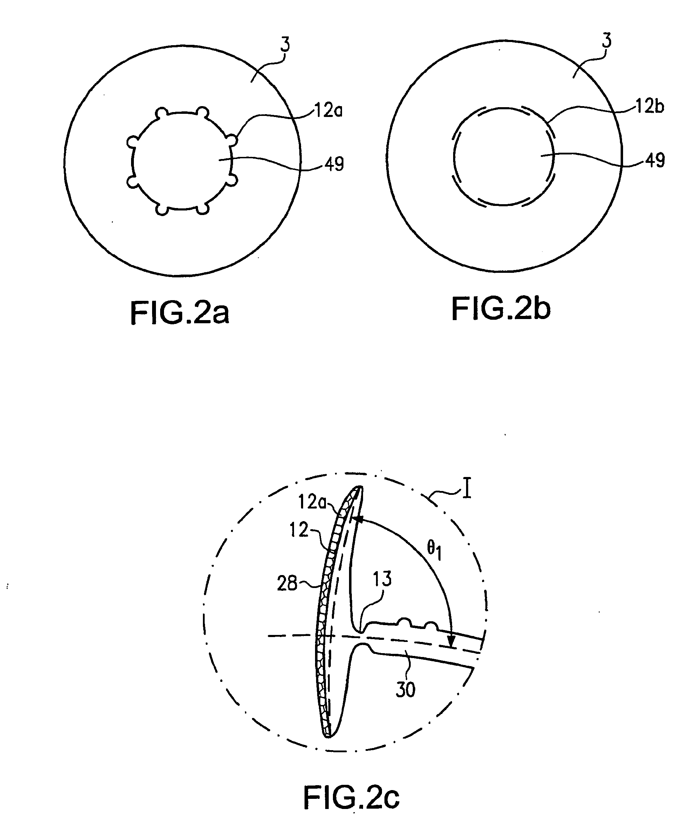

Fig. 2 zeigt einen Zitzengummi 1, der mit einer Melkbecherhülse 2 zu einem sogenannten Melkbecher zusammengebaut ist. Der Zitzengummi 1 besteht Im Wesentlichen aus einem oberen Kopfteil 3 und einem Saugstutzen 4, der an seinem oberen Ende mit dem Kopfteil 3 verbunden ist und an seinem unteren Ende 6 mit Hilfe eines Anschlussstutzens 5 in einer unteren Öffnung 7 der Melkbecherhülse 2 eingeklemmt ist. Der Zitzengummi 1 umfasst weiterhin einen Halterand 8, mit dem er das obere Ende der Melkbecherhülse 2 übergreift. Hierbei legt er sich gegen die Außenseite der Melkbecherhülse an. Zur zusätzllchen Abstützung kann, wie in dem vorliegenden Beispiel gezeigt, auch ein Teil des Halterandes der mit 9 bezeichnet ist, auf der Innenseite der Melkbecherhülse anliegen. Der Zitzengummi 1 weist an seinem oberen Ende eine Öffnung 49 auf, die von einer Dichtlippe 30 umfasst wird, durch die die Zitze des zu melkenden Tieres eingeführt wird. Zwischen der Innenseite der Melkbecherhülse 2 und der Außenseite des Saugstutzens 4 wird ein sogenannter Pulsraum 10 gebildet, der über einen Stutzen 11 mit einem Pulsator (nicht gezeigt) in Verbindung steht, der während des Betriebs im Pulsraum 10 abwechselnd ein Vakuum bzw. einen Unterdruck und Atmosphärendruck erzeugt. Der Zitzengummi 1 selbst ist üblicherweise rotationssymmetrisch zu seiner Längsachse ausgebildet. Es sind aber auch dreiecksförmige, vierecksförmige, elliptisch-geformte oder gerippte Querschnitte insbesondere im Saugstutzen 4 möglich.

Weiterhin definiert ein flächig ausgebildeter Zitzenauflageabschnitt 28 einen verbreitert ausgeführten Rand 12 der Einführöffnung 49, so dass der verbreiterte Rand 12 eine Zitze flächig über einen Zitzenauflageabschnitt 28 berühren kann. Der verbreiterte Rand 12 ist mit der Dichtlippe 30 verbunden, wobei die Verbindung eine Einkerbung 13 aufweist. Die Einkerbung 13 macht den verbreiterten Rand 12 beweglich, so dass sich Form und Richtung der Öffnung 49 beim Einführen der Zitze verändern kann. Das bedeutet auch, dass der Winkel zwischen der Fläche des verbreiterten Randes 12 und der Dichtlippe 30 veränderlich wird und die Einführöffnung 49 aufgedehnt werden kann.

Die bewegliche Verbindung 13 kann durch eine Einkerbung/Materialverdünnung oder durch eine besondere Materialbehandlung, z. B. durch besondere Weichmacher realisiert werden.

Der Zitzengummi 1 und der verbreiterte Rand 12 sind aus einem elastischen und hautfreundlichen Material gefertigt, vorzugsweise Gummi, Latex, Silikon oder einem Polymerwerkstoff.

Um einen besonders hautfreundlichen Kontakt zwischen der Zitze und dem Zitzengummi herzustellen können Teile der Zitzenauflageflächen (12a, 12b, 4a), insbesondere der flächige Zitzenauflageabschnitt 28 und/oder Innenflächen des Saugstutzens 4, gepolstert sein. Es kann aber auch der gesamte Zitzengummi aus einem besonders weichem, als Polsterung dienendem Material, z.B. Schaum-Silikon, hergestellt sein.

Die gepolsterte Oberfläche kann aus einem geschäumten Elastomer insbesondere Schaumsilikon bestehen. Das geschäumte Elastomer kann in einem Zweikomponentenverfahren hergestellt werden. Dabei wird in einem ersten Schritt eine erste Komponente aufgetragen, die an die benötigten Stellen fließen kann. Danach kann z. B. die zweite Komponente aufgespritzt werden, worauf sich dann der Schaum bildet.

In der in Fig. 2 gezeigten Ausführungsform ist das geschäumte Elastomer auf die Flächen 4a und 12a oberflächlich aufgespritzt. Es kann aber auch der gesamte flächige Zitzenauflageabschnitt 12 und/oder der Saugstutzen 4 aus dem geschäumten Elastomer bestehen. Die gepolsterten Oberflächen können auch als gepolsterte Taschen ausgebildet sein. Der Begriff Taschen steht hier für Bereiche, die gegenüber den angrenzenden Bereichen erhaben ausgebildet sind.

Alternativ zu oder in Kombination mit den geschäumten Taschen können die gepolsterten Oberflächen als mit einem Fluid, insbesondere mit Gas gefüllte Kissen ausgebildet sein. Ein mit Gas gefülltes Kissen hat den Vorteil, dass die Größe und die Festigkeit des Kissens durch Verändern des Druckes einstellbar ist, der sich unter umständen automatisch mit Pumpen und Drucksensoren einstellen lässt.

Weiterhin können die gepolsterte Tasche oder das mit Gas gefüllte Kissen als auswechselbarer Einsätze ausgebildet sein.

Die Funktionsweise des Zitzengummis 1 ist wie folgt:
Die Zitze wird durch die Einführöffnung 49 in den Zitzengummi 1 eingeführt. Die Dichtlippe 30 verhindert das Eindringen von Luft in den Saugstutzen 4, in den die Zitze während des Melkens eingeführt ist. Durch den verbreiterten Rand 12 wird erreicht, dass die Einführöffnung 49 nicht punktförmig an der Zitze abschließt, sondern mit einer Fläche. Der Druck auf die Zitze verteilt sich dadurch auf eine größere Fläche, wodurch eine Einschnürung der Zitze vermieden wird. Zudem wird das Vakuum im Zitzengummi 1 besser abgedichtet und Druckverluste werden vermindert oder vermieden. Die Haftung des Zitzengummis 1 an der Zitze wird verbessert und eine geringere Vakuumleistung wird benötigt. Wegen des geringeren Vakuums und der größeren Reibung der größeren Dichtfläche wird auch ein Hochklettern des Melkbechers an der Zitze beim Ausmelken reduziert. Das Euter kann dadurch vollständiger ausgemolken werden.

Während des Melkvorganges, bei dem im Inneren des Saugstutzens und damit unterhalb des unteren Endes der Zitze ein Melkvakuum anliegt, steht auch ein Saugraum 22 im oberen Teil des Kopfteils annähernd unter Vakuum. Dieser Druck im Saugraum 22 ändert sich während des Melkvorganges praktisch nicht.

Üblicherweise wird beim Melken mit einem Pulsbetrieb gearbeitet. D.h. in einer sogenannten Saugphase, in der Milch aus der Zitze durch das unterhalb der Zitze anliegende Vakuum abgesaugt wird, befindet sich der Pulsraum 10 über eine Leitung 11 unter einem entsprechenden Vakuum bzw. Unterdruck. Hierdurch nimmt der Saugstutzen 4 die in Fig. 1 gezeigte zylindrische Form an. In der darauffolgenden Entlastungsphase wird, während im Inneren des Saugstutzens weiterhin ein Vakuum bzw. ein Unterdruck aufrechterhalten wird, in dem Pulsraum 10 der Druck erhöht, typischerweise auf Atmosphärendruck. Hierdurch wird der Saugstutzen 4 aufgrund der auf beiden Seiten des Saugstutzens 4 wirkenden unterschiedlichen Drücke unterhalb der Zitze zusammengedrückt, so dass keine weitere Milch aus der Zitze abgesogen werden kann. Gleichzeitig wird hierdurch die Zitzenspitze massiert.

Durch die größere Fläche des Zitzenauflageabschnitts 28 an der Zitzeneinführöffnung 49, die an der Zitzenaußenfläche zur Auflage kommt, entsteht bei gleichen Vakuumbedingungen eine größere Reibungskraft, die den Melkbecher daran hindert, sich von der Zitze zu lösen. Durch die größere Fläche ist gleichzeitig die Dichtwirkung größer und man erhält geringere Vakuumverluste. Insgesamt lässt sich dadurch das Melkvakuum reduzieren bei gleichbleibender Melkleistung und Haftfähigkeit des Melkbechers an der Zitze. Durch das geringere Vakuum kann die Melkleistung sogar erhöht werden, da für die Tiere ein geringeres gleichbleibendes Vakuum angenehmer und weniger belastend ist.

Fig. 2a veranschaulicht eine Ausführungsform des verbreiterten Randes 12a in einer Ansicht von oben. In dieser Ausführungsform ist der verbreiterte Rand in Segmente aufgeteilt, die elastisch miteinander verbunden sind. Dadurch wird die Dehnbarkeit der Einführöffnung beim Einführen der Zitze erhöht.

Fig. 2b zeigt in einer weiteren Ausführungsform des verbreiterten Randes einen verbreiterten Rand 12b, der In Segmente aufgeteilt ist, die sich überlappen. Auch hier wird eine verbesserte Aufweitung der Einführöffnung beim Einführen der Zitze erreicht.

Fig. 2c zeigt einen Ausschnitt 1 des Zitzengummis 1, worin eine Winkelstellung Θ1 der flächigen Zitzenauflagefläche 28 zur Dichtlippe 30 veranschaulicht wird. Durch eine Einkerbung 13 ist die Winkelstellung Θ1 leicht veränderbar, so dass sich die flächige Zitzenauflagefläche 28 leichter an unterschiedliche Bedingungen wie Zitzengröße und Form sowie zum leichteren Einführen der Zitze anpassen kann.

Nachfolgend werden weitere Ausführungsformen beschrieben.

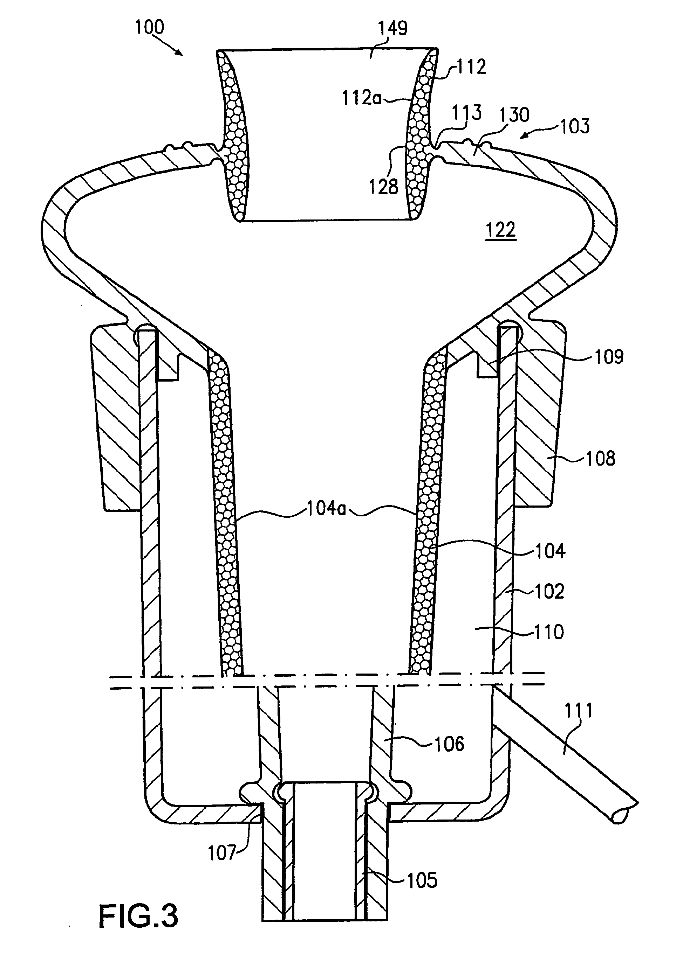

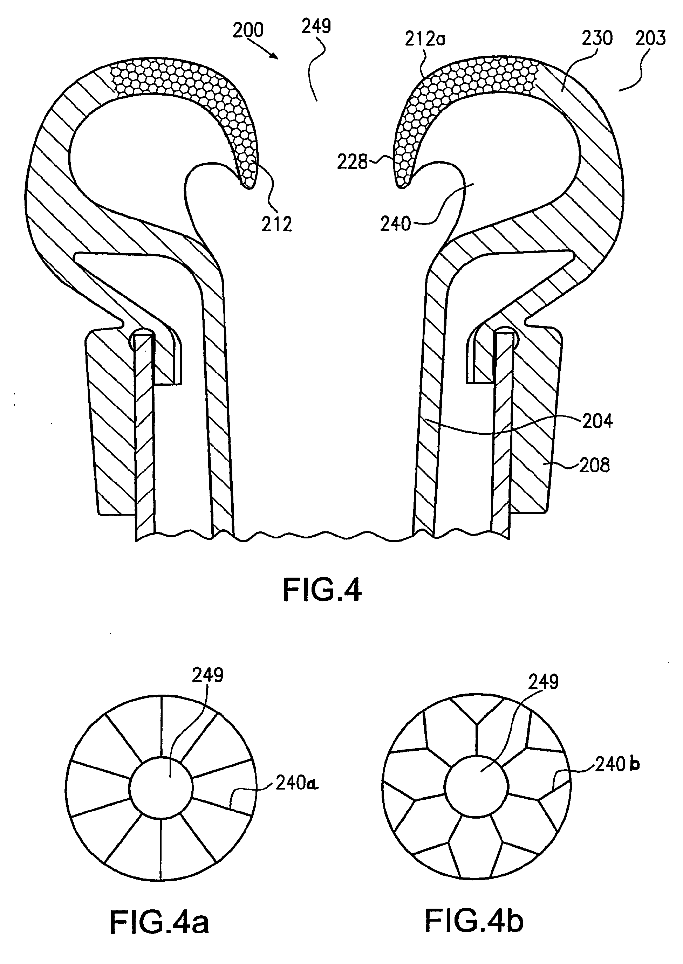

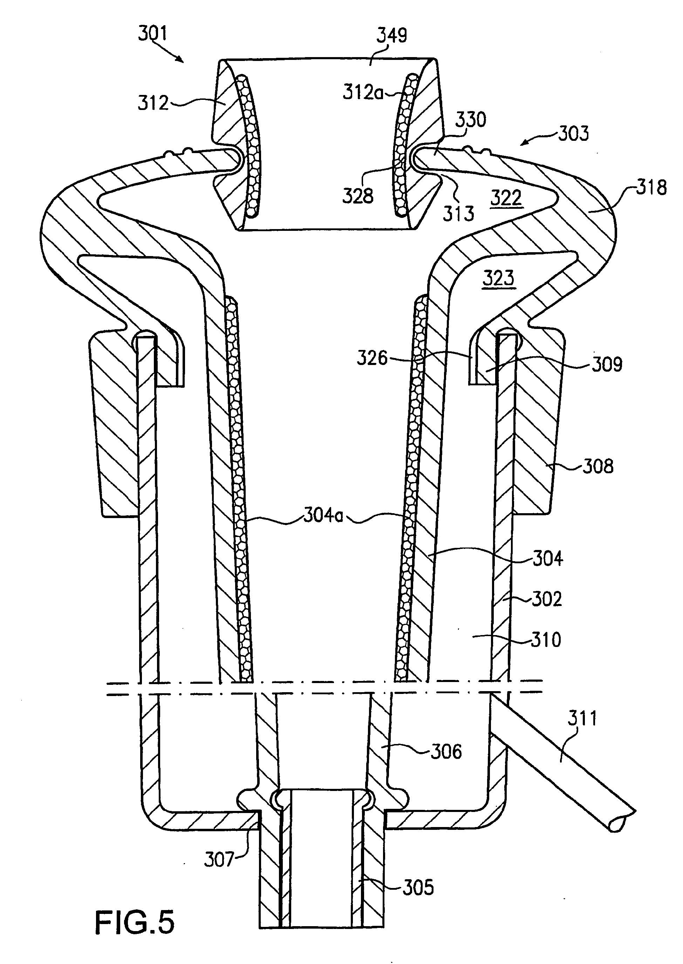

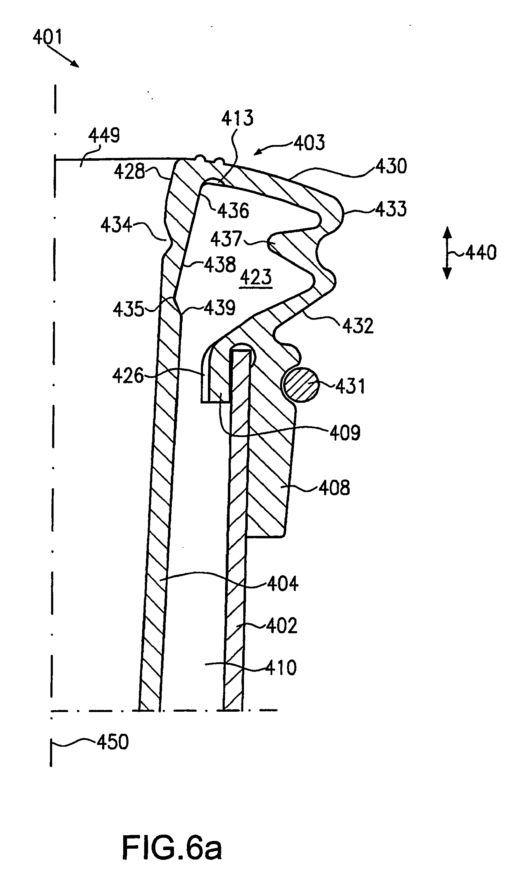

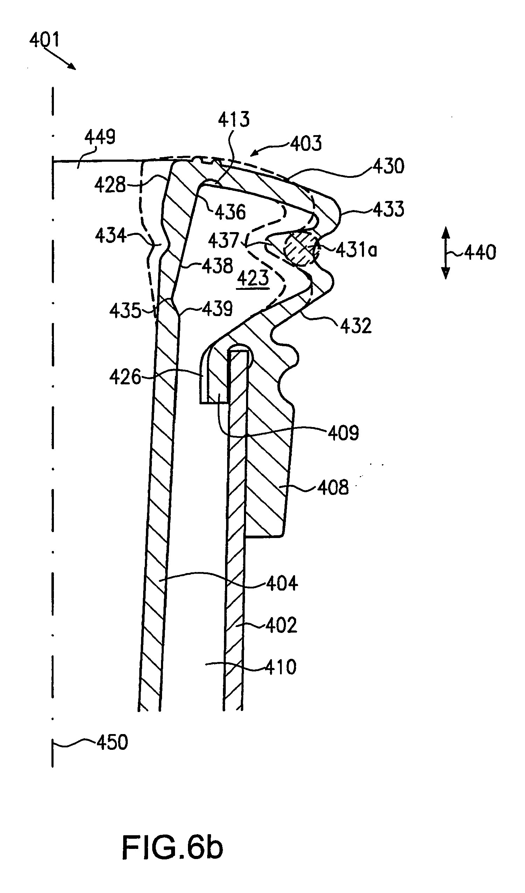

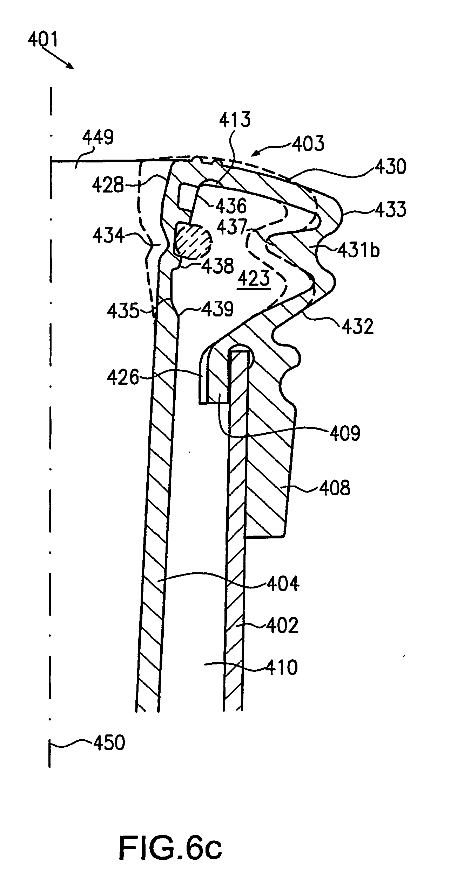

Merkmale in den Ausführungsformen gemäß den Fig. 2, 3, 4 und 5, die mit Merkmalen der Ausführungsform aus Fig. 2 übereinstimmen, wurden mit den gleichen, um 100 (Fig. 3), 200 (Fig. 4), 300 (Fig. 5), 400 (Fig. 6) usw. erhöhten Bezugszeichen, versehen. Materialien und Funktionsweisen von Merkmalen mit solchen Bezugszeichen sind analog, es sei denn die Beschreibung weist auf einen Unterschied hin.

In Fig. 3 wird eine Ausführungsform wie in Fig. 2 gezeigt, jedoch reicht der Pulsraum 110 bis knapp unter die Oberkante der Melkbecherhülse 102. Dadurch vergrößert sich der Hohlraum 122 innerhalb des Kopfteils 103 des Zitzengummis, wodurch sich der Krümmungsradius der Innenfläche des Hohlraums 122 vergrößert und sich damit der Zitzengummi besser reinigen lässt. Weiterhin wird eine größere elastische Beweglichkeit des Kopfteils mit verbessertem Massage- und Stimulationseffekt erzielt. Zudem wird die Anpassungsfähigkeit an verschiedene Zitzengrößen verbessert.

Wie bereits in Fig. 2 beschrieben, können die Zitzenauflageflächen 112a, 104a in den bereits geschilderten Ausführungsformen gepolstert sein. Fig. 3 zeigt eine voll geschäumte Variante der Auflageflächen 112a, 104a.

Fig. 4 zeigt eine Ausführungsform, in der Lamellen 240 im Kopfteil angeordnet sind, so dass bei Verformung des flächigen Auflageabschnitts 228 eine rücktreibende Kraft entsteht. Die Lamellen können radial verlaufen (Fig. 4a) oder eine Y-förmige Verzweigung aufweisen (Fig. 4b), so dass die rückstellende Kraft gleichmäßiger wirkt.

Wie bereits in Fig. 2 beschrieben, können die Zitzenauflageflächen 212a wieder in den bereits geschilderten Ausführungsformen gepolstert sein. Fig. 4 zeigt eine voll geschäumte Variante der Auflageflächen 212a.

Fig. 5 zeigt wieder eine vorteilhafte Weiterbildung der in Fig. 2 gezeigten Ausführungsform, wobei der verbreiterte Rand 312 abnehmbar ist. Der verbreiterte Rand 312 ist als rotationssymmetrisches Teil ausgebildet mit einer außen umlaufenden Kerbe 313, in die die Dichtlippe 330 einrastet. Die außen umlaufende Kerbe 313 ist dabei so ausgebildet, dass der als separate Teil ausgebildete verbreiterte Rand 312 in das Kopfteil 303 einrastbar ist und dabei beweglich bleibt. Dies kann dadurch erreicht werden, dass der Durchmesser der Einkerbung 313 etwas größer ist als die Dicke der Dichtlippe 330. In diesem Fall entstehen keilförmige Einschnitte an der Verbindung zwischen Dichtlippe und verbreitertem Rand, wodurch die Verbindung beweglich wird. Das wiederum bedeutet, dass der Winkel zwischen der Fläche des verbreiterten Randes 312 und der Dichtlippe 330 veränderlich wird und die Einführöffnung 349 aufgedehnt werden kann.

Anzumerken ist, dass der verbreiterte Rand nicht als rotationssymmetrisches Teil ausgebildet sein muss. Auch mehreckige Querschnittsflächen sind möglich.

Wie bereits in Fig. 2 beschrieben, können die Zitzenauflageflächen 312a, 304a in den bereits geschilderten Ausführungsformen gepolstert sein. Fig. 5 zeigt eine als Kissen/Tasche ausgebildete Polsterung der Auflageflächen 312a, 304a.

In Fig. 6a ist eine weitere Vergrößerung des Pulsationsraumes 410, 423 in dem Kopfteil 403 des Zitzengummis 401 dargestellt. Der verbreiterte Rand 428 ist über die bewegliche Verbindung 413 mit der Dichtlippe 430 verbunden. Die bewegliche Verbindung 413 kann durch eine Einkerbung/Materialverdünnung oder durch eine besondere Materialbehandlung, z. B. durch besondere Weichmacher realisiert werden. Verdünnungen 432, 433, 434 und 435 in der Zitzengummiwand lassen das Kopfteil 403 des Zitzengummis 401 kontrolliert zusammenfalten, wenn Vakuum im Pulsraum 423 anliegt. Dadurch können horizontale und vertikale Kräfte auf die Zitze ausgeübt werden. In der in Fig. 6a gezeigten Ausführungsform klappt der Wandabschnitt 438 nach innen und der Wandabschnitt 428 nach außen, so dass insgesamt nur eine Bewegung in Betriebsstellung in vertikaler Richtung (angedeutet durch den Pfeil 440) auftritt. Durch entsprechende Anordnung der verdünnten Stellen 434 und 435 können aber auch Bewegungen und damit Kräfte in horizontaler Richtung erzeugt werden.

Mit einem Vorspannungselement 431, 431 a, das ein Gummiring oder ein anderes ringförmiges federndes Element sein kann, kann der Durchmesser der Einführöffnung 449 variiert werden, so dass der Zitzengummi 401 auf unterschiedliche Zitzengrößen angepasst werden kann. Fig. 6a zeigt das Vorspannungselement 431 in einer ersten Position, wo die Einführöffnung einen erweiterten Querschnitt aufweist, so dass die Einführung der Zitze vereinfacht wird.

Fig. 6b zeigt das Vorspannungselement 431 a der Ausführungsform von Fig. 6a in einer zweiten Position, wo die Einführöffnung 449 einen verengten Querschnitt aufweist, so dass die Haftung an der Zitze und die Dichtigkeit verbessert ist. Die gestrichelte Linie veranschaulicht, in welche Richtung sich der flächige Zitzenauflageabschnitt 428 bewegt, wenn das Vorspannelement 431 in die zweite Position geschoben wird.

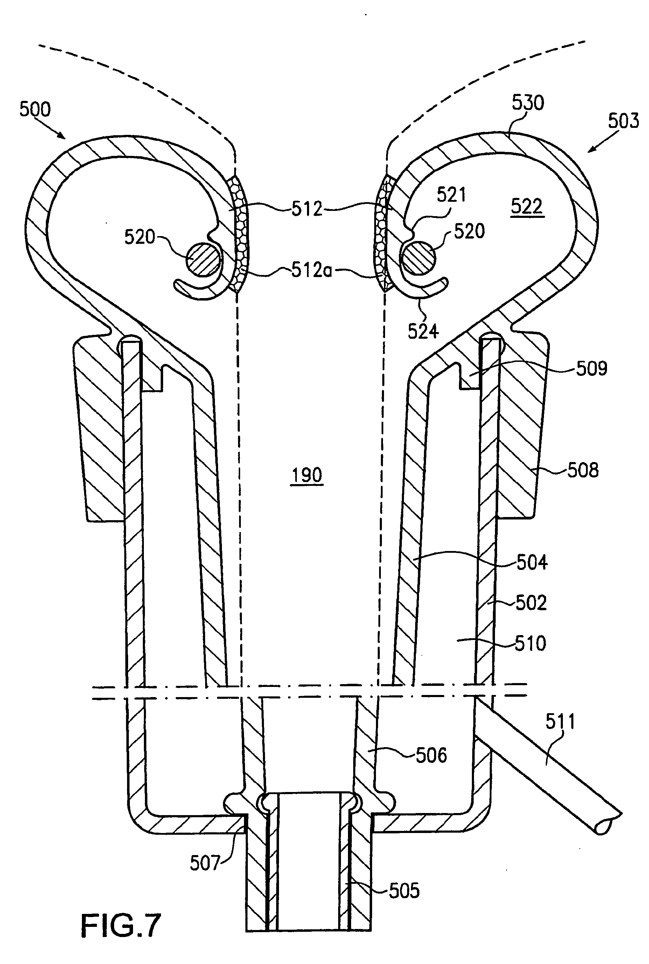

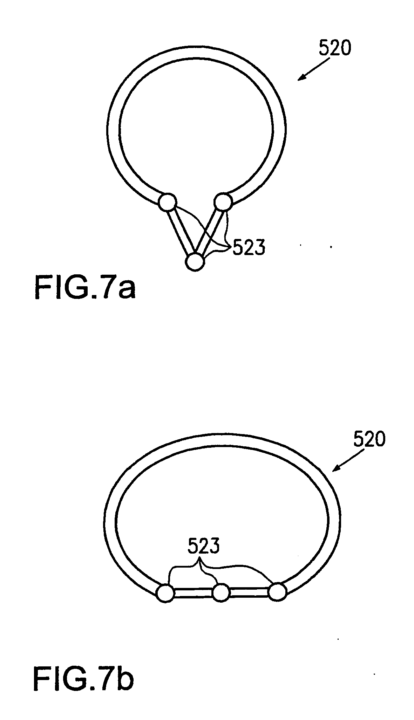

Das Vorspannungselement, das in den Figuren 6a und 6b gezeigt ist, kann auch in der Form ausgebildet sein wie es in Verbindung mit Fig. 7a und 7b beschrieben ist.

Fig. 6c zeigt eine alternative Anordnung des Vorspannungselements 431 b auf der Innenseite des Hohlraums 423. Die gestrichelte Linie veranschaulicht wieder, in welche Richtung sich der flächige Zitzenauflageabschnitt 428 bewegt, wenn sich das Vorspannelement 431 in einem Zustand mit reduziertem Querschnitt befindet, wie es im Zusammenhang mit Fig. 7bbeschrieben wird.

Weiterhin können wie bereits in Fig. 2 beschrieben (In den Figuren 6a, 6b und 6c nicht gezeigt) die Zitzenauflageflächen in den bereits geschilderten Ausführungsformen gepolstert sein.

Fig. 7 zeigt eine Ausführungsform, in der das Vorspannungselement in Form eines ringförmigen Elements 520 an einer Innenwand des Hohlraums 522 im Kopfteil 503 des Zitzengummis 500 angeordnet ist. Erste und zweite Vorsprünge, die in Richtung des Hohlraums 522 gerichtet sind, positionieren das ringförmige Vorspannungselement 520.

Weiterhin können, wie bereits in Fig. 2 beschrieben, die Zitzenauflageflächen 512a in den bereits geschilderten Ausführungsformen gepolstert sein.

Fig. 7a und Fig. 7b zeigen eine Ausführungsform des ringförmigen Vorspannungselements 520. Darin ist das ringförmige Element 520 mit einem Klappmechanismus versehen, mit dem das ringförmige Element 520 zwischen zwei Querschnitten umgeschaltet werden kann. Der Klappmechanismus beinhaltet Gelenkabschnitte 523, so dass ein Teilbereich des ringförmigen Elements 520 zwischen einem gefalteten und einem entfalteten Zustand wechseln kann, wenn Druck radial auf das ringförmige Element 520 ausgeübt wird. Mit dieser Ausführungsform des ringförmigen Elements ist es möglich, mit einer Hand gleichzeitig den Melkbecher zu halten und den Radius des ringförmigen Elements zu verändern. Fig. 7a zeigt die Ausführungsform des Vorspannungselements 520 in einem eingefalteten Zustand, und Fig. 7b zeigt die Ausführungsform von Fig. 7a in einem entfalteten Zustand.

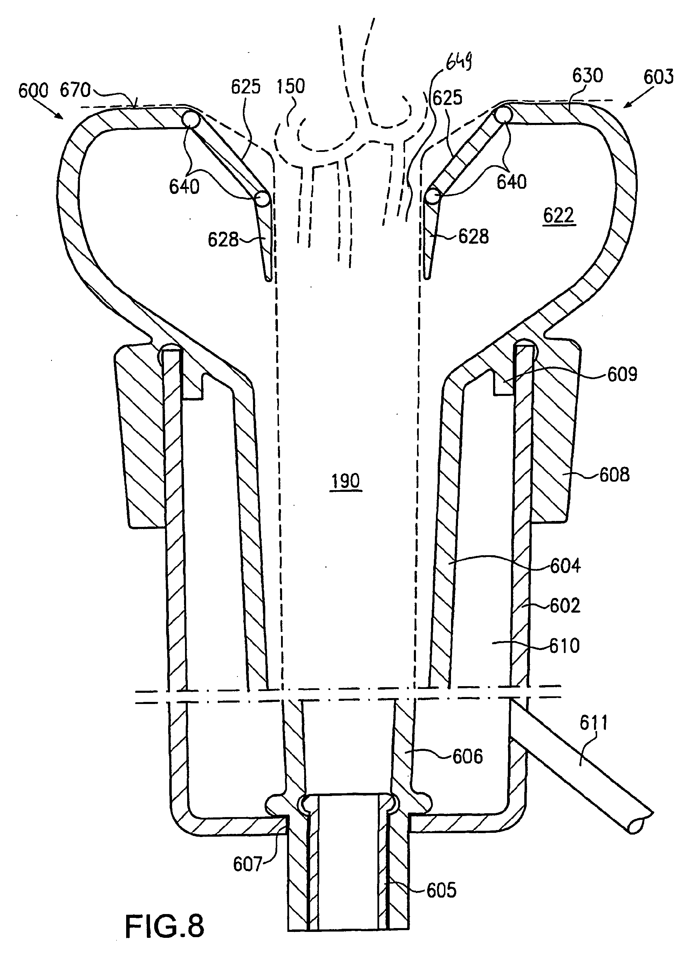

Fig. 8 zeigt eine Ausführungsform der vorliegenden Erfindung, bei der ein Teil der Einführöffnung zur Innenseite des Zitzengummis derart konisch zuläuft, dass der an der Basis der Zitze liegende Fürstenbergsche Venenring 150 nicht mit dem Zitzengummi 600, der flächigen Zitzenauflagefläche 628 und der Dichtlippe 630 in Kontakt kommen kann und kein Druck darauf ausgeübt werden kann, selbst wenn der Melkbecher in Richtung des Euters verrutscht. In diesem Beispiel schließt sich am Rand einer weiten Öffnung der konisch zulaufenden Einführöffnung eine Euterauflagefläche 670 an, die verhindern kann, dass die Zitze 190 und Teile des Euters mit dem Fürstenbergsche Venenring 150 durch ein Melkvakuum in den Zitzengummi hineingezogen wird, wenn das Euter beim Melkvorgang schrumpft, so dass der Fürstenbergsche Venenring 150 nicht in den engen, druckausübenden Bereich des Zitzengummis insbesondere in die flächigen Zitzenauflagefläche kommen kann. Das in Figur 8 gezeigte Beispiel zeigt eine konisch zulaufende Fläche 625, die im Querschnitt linear verläuft. Es sind jedoch auch andere Querschnittsformen wie konkave Flächen oder konvexe Flächen möglich.

Weiterhin kann ein Übergang 640 zwischen der konisch zulaufenden Fläche 625 und dem flächigen Zitzenauflageabschnitt 628 beziehungsweise der Euterauflagefläche 670 gelenkartig ausgebildet ist. Durch die Gelenke 640 wird ein Effekt der konisch zulaufenden Fläche verstärkt, bei dem sich die unteren Ränder des flächigen Zitzenauflageabschnitts 628 zur Zitze 190 bewegen, wenn der Zitzengummi 600 ungewollt nach unten von der Zitze 190 rutscht. Die Einführöffnung verengt sich dadurch und die Haftung des Zitzengummis 600 an der Zitze 190 verbessert sich. Der gelenkartige Übergang 640 zwischen der konisch zulaufenden Fläche 625 und dem flächigen Zitzenauflageabschnitt 628 beziehungsweise der Euterauflagefläche 670 kann eine Materialverdünnung, eine Einkerbung oder eine Veränderung der Materialeigenschaften im Vergleich zu dem angrenzenden Material aufweisen. Dadurch nimmt der Übergang eine gelenkartige Eigenschaft an.

Der Vollständigkeit halber muss gesagt werden, dass, wie bereits in Fig. 2 beschrieben, die Zitzenauflageflächen in den bereits geschilderten Ausführungsformen gepolstert sein können (in Fig. 8 nicht gezeigt).

## Patentansprüche

1. Zitzengummi (600) zur Verwendung an einem Melkbecher eines Melkgeschirrs mit
einem Kopfteil (603), an dem eine Dichtlippe (630) vorgesehen ist, die eine Einführöffnung (649) für eine Zitze (190) bildet,
einem Halterand (608) zum Übergreifen einer Melkbecherhülse (602),
einem mit dem Kopfteil (603) in Verbindung stehenden Saugstutzen (604), sowie einem flächigen Zitzenauflageabschnitt (628), der an der an dem Kopfteil (603) vorgesehenen Dichtlippe (630) ausgebildet ist und die Einführöffnung (649) definiert,
wobei ein Teil der Einführöffnung (649) zur Innenseite des Zitzengummis (600) derart konisch zuläuft, dass der an der Basis der Zitze liegende Fürstenbergsche Venenring (150) nicht mit dem Zitzengummi (600) in Kontakt kommen kann und kein Druck darauf ausgeübt werden kann, selbst wenn der Melkbecher in Richtung des Euters verrutscht,
wobei eine konisch zulaufende Fläche (625) der konisch zulaufenden
Einführöffnung (649) im Querschnitt konkav, konvex oder linear ist, und **dadurch gekennzeichnet, dass**
Übergänge (640) zwischen der konisch zulaufenden Fläche (625) und dem flächigen Zitzenauflageabschnitt (628) sowie zwischen der konisch zulaufenden Fläche (625) und einer Euteranlagefläche (670) jeweils gelenkartig ausgebildet sind, wobei die gelenkartigen Übergänge (640) eine Materialverdünnung, eine Einkerbung oder eine Veränderung der Materialeigenschaften im Vergleich zu dem angrenzenden Material ist, so dass die Übergänge (640) eine gelenkartige Eigenschaft annehmen.

2. Zitzengummi (600) nach Anspruch 1, **dadurch gekennzeichnet, dass** sich am Rand einer weiten Öffnung der konisch zulaufenden Einführöffnung (649) die Euterauflagefläche (670) anschließt, die ausgebildet ist zu verhindern, dass die Zitze (190) und Teile des Euters mit dem Fürstenbergsche Venenring (150) durch ein Melkvakuum in den Zitzengummi (600) hineingezogen wird, wenn das Euter beim Melkvorgang schrumpft, so dass der Fürstenbergsche Venenring (150) nicht in den engen, druckausübenden Bereich des Zitzengummis (600) kommen kann.

3. Zitzengummi (600) nach einem der Ansprüche 1 bis 2, **dadurch gekennzeichnet, dass** zumindest ein Teil des flächigen Zitzenauflageabschnitts (628) und/oder Innenflächen des Saugstutzens (604) gepolsterte Oberflächen aufweisen.

4. Zitzengummi (600) nach Anspruch 3, **dadurch gekennzeichnet, dass** die gepolsterte Oberflächen aus einem geschäumten Elastomer besteht.

5. Zitzengummi (600) nach Anspruch 4, **dadurch gekennzeichnet, dass** das geschäumte Elastomer Schaumsilikon ist.

6. Zitzengummi (600) nach Anspruch 4 oder 5, **dadurch gekennzeichnet, dass** das geschäumte Elastomer oberflächlich aufgespritzt ist.

7. Zitzengummi (600) nach Anspruch 4 oder 5, **dadurch gekennzeichnet, dass** der gesamte flächige Zitzenauflageabschnitt (628) und/oder der Saugstutzen (604) aus dem geschäumten Elastomer bestehen.

8. Zitzengummi (600) nach einem der Ansprüche 3 bis 7, **dadurch gekennzeichnet, dass** die gepolsterte Oberflächen als gepolsterte Taschen ausgebildet sind.

9. Zitzengummi (600) nach Anspruch 3, **dadurch gekennzeichnet, dass** die gepolsterte Oberfläche ein mit einem Fluid gefülltes Kissen ist.

10. Zitzengummi (600) nach Anspruch 8 oder 9, **dadurch gekennzeichnet, dass** die gepolsterte Tasche oder das mit einem Fluid gefüllte Kissen ein auswechselbarer Einsatz ist.

## Claims

1. A teat rubber (600) for use on a milking cup of a milking apparatus, comprising
a head part (603) having provided thereon a sealing lip (630) that forms an insertion opening (649) for a teat (190),
a holding edge (608) for grasping a milking cup sleeve (602),
a suction connecting piece (604) connected to the head part (603) as well as
a planar teat bearing section (628) which is formed on the sealing lip (630) provided on the head part (603) and which defines the insertion opening (649),
a part of said insertion opening (649) conically tapering towards an inner side of the teat rubber (600) in such a way that an inner annular fold (150) located on the base of the teat cannot come into contact with the teat rubber (600) and that pressure cannot be applied thereto, not even if the milking cup should shift in the direction of an udder,
wherein a conically tapering surface (625) of the conically tapering insertion opening (649) is concave, convex or linear, and
**characterized in that**,
transitions (640) between the conically tapering surface (625) and the planar teat bearing section (628) as well as between the conically tapering surface (625) and an udder bearing surface (670) are respectively implemented in a hingelike manner, wherein the hingelike transitions (640) are a portion of reduced material thickness, an indentation or a variation of the material properties in comparison with the properties of the adjoining material, so that the transitions (640) will assume hingelike properties.

2. A teat rubber (600) according to claim 40, **characterized in that** the boundary of a wide opening of the conically tapering insertion opening (649) is followed by the udder bearing surface (670) by means of which the teat (190) and parts of the udder with the inner annular fold (150) can be prevented from being drawn into the teat rubber (600) by a milking vacuum, when the udder shrinks during the milking process, so that said inner annular fold (150) cannot enter the narrow, pressure-exerting area of the teat rubber (600).

3. A teat rubber (600) according to one of the claims 1 to 2, **characterized in that** at least a part of the planar teat bearing section (628) and/or inner surfaces of the suction connecting piece (604) have cushioned surfaces.

4. A teat rubber (600) according to claim 3, **characterized in that** the cushioned surfaces consist of a foamed elastomer.

5. A teat rubber (600) according to claim 4, **characterized in that** the foamed elastomer is a foam silicone.

6. A teat rubber (600) according to claim 4 or 5, **characterized in that** the foamed elastomer is sprayed superficially.

7. A teat rubber (600) according to claim 4 or 5, **characterized in that** the whole planar teat bearing section (628) and/or the suction connecting piece (604) consist of the foamed elastomer.

8. A teat rubber (600) according to one of the claims 3 to 7, **characterized in that** the cushioned surfaces are implemented as cushioned pockets.

9. A teat rubber (600) according to claim 3, **characterized in that** the cushioned surface is a fluid-filled pad.

10. A teat rubber (600) according to claim 8 or 9, **characterized in that** the cushioned pocket or the fluid-filled pad is a replaceable insert.

## Revendications

1. Caoutchouc pour trayon (600) destiné à être utilisé avec un gobelet trayeur d'une machine de traite, comportant
un élément de tête (603) pourvu d'une lèvre d'étanchéité (630) qui constitue une ouverture d'introduction (649) pour un trayon (190),
un bord de maintien (608) pour recouvrir un gobelet trayeur (602),
une buse de succion (604) connectée à l'élément de tête (603), et
une section plane de support du trayon (628) agencée sur la lèvre d'étanchéité (630) pourvue sur l'élément de tête (603) et définissant l'ouverture d'introduction (649),
dans lequel une partie de l'ouverture d'introduction (649) présente une forme conique du côté interne du caoutchouc pour trayon (600) de telle sorte que la rosette de Fürstenberg (150) située à la base du trayon ne peut pas entrer en contact avec le caoutchouc pour trayon (600) et qu'aucune pression ne peut y être appliquée, même lorsque le gobelet trayeur est poussé en direction du pis,
dans lequel une surface conique (625) de l'ouverture d'introduction conique (649) est concave, convexe ou linéaire en coupe transversale,
et
**caractérisé en ce que**
des transitions (640) entre la surface conique (625) et la section plane de support du trayon (628) ainsi qu'entre la surface conique (625) et une surface de contact avec le pis (670) sont chacune réalisées sous une forme articulée, dans lequel les transitions à forme articulée (640) sont constituées par un amincissement du matériau, une indentation, ou une modification des propriétés du matériau par rapport au matériau avoisinant, de telle manière que les transitions (640) présentent une propriété d'articulation.

2. Caoutchouc pour trayon (600) selon la revendication 1, **caractérisé en ce que** la surface de support du pis (670) rejoint le bord d'un large orifice de l'ouverture d'introduction conique (649) et est constituée pour empêcher que le trayon (190) et des parties du pis comprenant la rosette de Fürstenberg (150) ne soient aspirés par un vide de traite dans le caoutchouc pour trayon (600) lorsque le pis se contracte lors de la traite, de telle sorte que la rosette de Fürstenberg (150) ne
puisse pas entrer dans la zone étroite de compression du caoutchouc pour trayon (600).

3. Caoutchouc pour trayon (600) selon l'une des revendications 1 ou 2, **caractérisé en ce qu'**au moins une partie de la section plane de support du trayon (628) et/ou des surfaces internes de la buse de succion (604) comporte des surfaces matelassées.

4. Caoutchouc pour trayon (600) selon la revendication 3, **caractérisé en ce que** les surfaces matelassées sont constituées d'une mousse élastomère.

5. Caoutchouc pour trayon (600) selon la revendication 4, **caractérisé en ce que** la mousse élastomère est une mousse de silicone.

6. Caoutchouc pour trayon (600) selon la revendication 4 ou 5, **caractérisé en ce que** la mousse élastomère est appliquée en surface.

7. Caoutchouc pour trayon (600) selon la revendication 4 ou 5, **caractérisé en ce que** l'entièreté de la section plane de support du trayon (628) et/ou de la buse de succion (604) est réalisée en mousse élastomère.

8. Caoutchouc pour trayon (600) selon l'une des revendications 3 à 7, **caractérisé en ce que** les surfaces matelassées sont constituées comme des poches matelassées.

9. Caoutchouc pour trayon (600) selon la revendication 3, **caractérisé en ce que** la surface matelassée est un coussinet rempli avec un fluide.

10. Caoutchouc pour trayon (600) selon la revendication 8 ou 9, caractérisé en ce la poche matelassée ou le coussinet rempli avec un fluide est un insert amovible.
